# FASCICULE DE BREVET EUROPEEN

(11) **EP 2 994 514 B1**
(45) Date de publication et mention de la délivrance du brevet: **03.07.2019**
(21) Numéro de dépôt: 14722202.0
(22) Date de dépôt: 07.05.2014
(51) Int. Cl.: C09K 5/10, C09K 5/20, C23F 11/08, C23F 11/12

(54) **LIQUIDE DE REFROIDISSEMENT CONCENTRE**
KONZENTRIERTES KÜHLMITTEL
CONCENTRATED COOLANT

(30) Priorité: 07.05.2013 FR 1354164
(43) Date de publication de la demande: 16.03.2016
(73) Titulaire: Dehon S.A., 75011 Paris (FR)
(72) Inventeur: BEHAGHEL, Pierre, F-69003 Lyon (FR)
(74) Mandataire: Gevers & Orès
(86) Numéro de dépôt international: PCT/EP2014/059310
(87) Numéro de publication internationale: WO 2014/180886

(56) Documents cités:
- US-A- 4 647 392
- US-A- 5 366 651
- US-A- 6 143 243
- US-A1- 2003 052 302
- US-A1- 2006 033 076
- US-A1- 2010 270 494
- US-A1- 2012 111 536
- US-B1- 6 235 217

## Description

La présente invention concerne un liquide de refroidissement concentré comprenant un composant abaissant la température de congélation et un mélange d'inhibiteurs de corrosion, utilisable par exemple comme fluide de transfert de chaleur, liquide de dégivrage, ou fluide fonctionnel dans des applications industrielles ou domestiques.

De plus en plus, on cherche à produire des liquides de refroidissement comportant un mélange d'inhibiteurs de corrosion qui soit efficace et qui réponde de préférence aux normes écologiques, c'est-à-dire des inhibiteurs de corrosion qui soient non toxiques et compatibles avec des liquides abaissant la température de congélation (liquides anti-congelants) de toutes sortes et en particulier des liquides biodégradables obtenus à partir de matières premières renouvelables et d'origine végétale.

De tels liquides de refroidissement sont déjà sur le marché. Il s'agit de liquides prêts à l'emploi comportant du 1,3-propanediol d'origine végétale et des inhibiteurs de corrosion dilués dans de l'eau, et qui sont vendus pour une température de congélation donnée, généralement comprise entre -5 °C et -30 °C. On peut, par exemple, citer le liquide décrit dans la demande de brevet FR 2958654 de la demanderesse ou encore des produits prêts à l'emploi qu'elle commercialise.

Mais la demanderesse a ici souhaité proposer un liquide de refroidissement concentré, qui puisse être d'origine écologique et destiné à être dilué pour fournir un liquide caloporteur prêt à l'emploi. Il comporte classiquement un minimum d'eau et majoritairement un liquide abaissant la température de congélation d'un liquide caloporteur, ainsi que des inhibiteurs de corrosion. De bonnes propriétés anticorrosives sont essentielles pour ne pas dégrader les matériaux dans lesquels est contenu le liquide de refroidissement. Un tel liquide concentré contient très peu d'eau, le volume de stockage est ainsi moins important que pour un liquide prêt à l'emploi, ce qui facilite son transport et son stockage. De plus, l'utilisateur peut choisir la température de congélation désirée, comprise entre -10 °C et -55 °C, en diluant le liquide concentré avec la quantité d'eau appropriée. De tels produits concentrés existent, mais, d'une part, le liquide abaissant la température de congélation du liquide caloporteur est en général du mono-éthylène glycol (MEG) qui est toxique ou du mono-propylène glycol (MPG) qui est non toxique mais principalement d'origine fossile, et, d'autre part, leurs mélanges d'inhibiteurs de corrosion ne sont pas compatibles, pour des problèmes de solubilité et de stabilité principalement, avec des liquides anti-congelants écologiques. D'autres produits existent aussi, comprenant majoritairement du 1,3-propanediol (PDO), une matière première pouvant être reconnue écologique, d'origine végétale, renouvelable et non toxique et utilisable pour la préparation de liquides de refroidissement écologiques. En effet, le PDO peut être obtenu à partir de glucose extrait de matières premières végétales telles que l'amidon de maïs via un processus de fermentation à l'aide de micro-organismes. Mais ces produits à base de PDO utilisent par contre des inhibiteurs de corrosion toxiques, non biodégradables tels que des nitrates, des nitrites, des borates, des phosphates, des molybdates, des acides organiques.

Ainsi, une demande existait pour un concentrat à base d'un liquide anti-congelant, qui comporte des inhibiteurs de corrosion répondant aux exigences écologiques, qui soient compatibles avec des liquides écologiques et qui donnent de bons résultats anti-corrosion. Les mélanges d'inhibiteurs de corrosion connus par l'homme du métier et utilisés pour des liquides de refroidissement concentrés à base de MEG ou de MPG ou utilisés pour des liquides de refroidissement prêts à l'emploi à base de PDO, n'ont pas pu être utilisés à cause de problèmes de toxicité ou de solubilité de ces inhibiteurs dans un milieu comportant très peu d'eau.

Le document US-A1-2003/0052302 décrit un composé antigel concentré, dont le composant principal est du PDO fossile. Plusieurs inhibiteurs de corrosion sont ajoutés pour aboutir à diverses formulations, qui sont identifiées dans des tableaux numérotés de 1 à 12. Certaines compositions comprennent deux acides carboxyliques qui sont, pour l'un, de l'acide 2-éthylhexanoïque (2-EHA) et, pour l'autre, de l'acide sébacique. Les concentrations associées sont de 4 à 6 % en masse pour le 2-EHA et de 0 à 1,5 % en masse pour l'acide sébacique. Il a, par contre, été remarqué, en voulant reproduire les résultats donnés par ce document, une impossibilité à dissoudre 1% d'acide sébacique dans du PDO d'origine fossile. Cette impossibilité disparait avec du PDO d'origine végétale et un apport d'eau.

Comme cela sera expliqué plus en détail dans ce qui suit, la demanderesse a constaté une mauvaise solubilité et une diminution de l'inhibition de la corrosion dès 4% en masse d'acide monocarboxylique et 1% en masse d'acide dicarboxylique dans un liquide de refroidissement concentré. Les liquides de refroidissement du document US-A1-2003/0052302 (qui comportent au moins 4% de 2-EHA) ne sont donc pas satisfaisants d'un point de vue de la solubilité de leurs composants et de leurs propriétés anti-corrosion. Par ailleurs, le 2-EHA est particulièrement toxique (cancérigène).

Les documents US 2006/033076 A1, US 6 235 217 B1, US 6 143 243 A et US 2010/270494 A1 décrivent des liquides de refroidissement.

La demanderesse s'est ainsi heurtée à des problèmes de solubilité des inhibiteurs de corrosion écologiques dans un liquide anti-congelant, associés à des problèmes de performance au niveau anti-corrosion et de toxicité du liquide.
Ce sont ces problèmes que vise à résoudre l'invention de la présente demande.

L'invention concerne donc un liquide de refroidissement concentré destiné à être ajouté à un liquide caloporteur pour en abaisser la température de congélation, comportant un glycol en C2-C6, de l'eau en quantité inférieure à 10% en masse et des inhibiteurs de corrosion, lesdits inhibiteurs de corrosion étant un mélange au moins d'un acide monocarboxylique aliphatique en C7-C11 et d'un acide dicarboxylique aliphatique en C4-C15, caractérisé en ce qu'il comporte une quantité dudit acide dicarboxylique aliphatique en C4-C15 comprise entre 0,1 et 1% en masse et une quantité dudit acide monocarboxylique aliphatique en C7-C11 supérieure ou égale à 0,5% et inférieure à 4% en masse, le rapport en masse entre ledit acide monocarboxylique aliphatique en C7-C11 et ledit acide dicarboxylique aliphatique en C4-C15 étant compris entre 3 et 7. De préférence, ce rapport est compris entre 4,5 et 5,5 et optimisé ce rapport est de 5.

On entend par « glycol en C2-C6 », un composé chimique organique ayant entre 2 et 6 atomes de carbone caractérisé par un certain nombre de groupes hydroxyles. De même, un « acide dicarboxylique aliphatique en C4-C15 » est un acide linéaire ou ramifié ayant entre 4 et 15 atomes de carbone et ayant deux fonctions acide carboxylique ; un « acide monocarboxylique aliphatique en C7-C11 » est un acide linéaire ou ramifié ayant entre 7 et 11 atomes de carbone et ayant une seule fonction acide carboxylique.

La quantité d'acide monocarboxylique aliphatique en C7-C11 est strictement inférieure à 4% pour ne pas risquer de problème de solubilité et obtenir une meilleure stabilité de la composition dans le temps. La demanderesse a de plus constaté que cette faible quantité d'acide monocarboxylique suffit pour obtenir de bonnes performances anti-corrosion. De préférence, l'acide monocarboxylique aliphatique est en C9-C11.

Ainsi, de façon surprenante, de bons résultats anti-corrosion sont obtenus en utilisant un rapport entre un acide monocarboxylique aliphatique en C7-C11 et un acide dicarboxylique aliphatique en C4-C15 compris entre 3 et 7. Ces bons résultats sont dus à un effet de synergie entre les acides mono- et di-carboxyliques obtenu lorsque ce rapport particulier est respecté. Il est alors possible d'obtenir un liquide de refroidissement concentré, écologique, non toxique et non corrosif où tous les composants sont solubilisés dans tout type de glycol et en particulier dans des glycols écologiques, comme le 1,3-propanediol, par exemple. De plus ce mélange est stable après obtention, c'est-à-dire qu'il ne précipite pas lorsqu'il est stocké ou utilisé à basse température.

Selon une forme de réalisation, le liquide de refroidissement concentré comporte entre 0,1 et 1% en masse d'un acide dicarboxylique aliphatique en C4-C15 et entre 0,5 et 4% en masse d'un acide monocarboxylique aliphatique en C7-C11. L'augmentation de l'une ou l'autre des quantités de ces deux types d'acide conduit, en plus d'une mauvaise solubilité, à une diminution de l'inhibition de la corrosion. Ainsi pour des quantités d'acide monocarboxylique supérieures à 6% en masse et d'acide dicarboxylique supérieures à 2%, la solubilité est plus difficile et les résultats anti-corrosion sont diminués. Cette dégradation des résultats est constatée dès 4% en masse d'acide monocarboxylique et 1% en masse d'acide dicarboxylique. Les pourcentages sont des pourcentages en masse totale de liquide de refroidissement concentré.

Selon une forme de réalisation préférée, le liquide de refroidissement concentré comporte entre 0,3 et 0,8% en masse d'un acide dicarboxylique aliphatique en C4-C15 et entre 2 et 3% en masse d'un acide monocarboxylique aliphatique en C7-C11. Dans ces proportions, la solubilisation de chaque composé dans un glycol en C2-C6 est totale, le liquide concentré final est stable et les résultats anti-corrosion sont conformes aux normes.

Les proportions encore plus optimisées sont un mélange d'environ 0,5% en masse d'un acide dicarboxylique aliphatique en C4-C15 et d'environ 2,5% en masse d'un acide monocarboxylique aliphatique en C7-C11.

C'est ainsi, en utilisant ces deux types d'acides dans des proportions bien déterminées, qu'un liquide de refroidissement concentré comportant majoritairement un liquide anti-congelant, tel qu'un glycol en C2-C6, et très peu d'eau a été mis au point et présente les avantages nécessaires pour un liquide de refroidissement concentré efficace et écologique :
- une totale solubilité de tous les composants ;
- un pouvoir corrosif inhibé par des inhibiteurs de corrosion ;
- l'utilisation possible d'un liquide anti-congelant d'origine végétale, tel qu'un glycol en C2-C6, renouvelable et non toxique et donc un caractère écologique marqué ;
- une stabilité après obtention.

Selon une forme de réalisation, le glycol en C2-C6 peut être du glycérol, de l'éthylène glycol, du diéthylène glycol, du propylène glycol, un dipropylène glycol, le 1,3-propanediol ou un mélange de plusieurs glycols en C2-C6. De préférence le glycol en C2-C6 est le 1,3-propanediol.

En particulier, il s'agit du « bio-1,3-propanediol ou du 1,3-propanediol d'origine végétale» (dénommé également bio-PDO), i.e. du 1,3-propanediol fabriqué à partir de glucose extrait de matières premières végétales telles que l'amidon de maïs via un processus de fermentation à l'aide de micro-organismes. Il s'agit ainsi de ressources renouvelables et le produit peut être un liquide de refroidissement concentré d'origine écologique. Contrairement au 1,3-propanediol issu de procédés pétrochimiques, le bio-1,3-propanediol n'est pas contaminé par certaines impuretés permettant ainsi d'obtenir de meilleurs résultats en particulier lors de la préparation du liquide de refroidissement concentré. Ce produit présente de nombreux avantages, notamment en termes de viscosité, qui reste faible, même à très basse température, et de stabilité de pH, ce composant restant stable dans le temps et ne s'oxydant que très peu. Le liquide de refroidissement concentré selon l'invention est ainsi écologique et d'origine végétale, et comprend une matière première renouvelable et non toxique.

La demanderesse a constaté de meilleurs résultats avec du PDO d'origine végétale (ou bio-PDO) qu'avec du PDO d'origine fossile, en particulier en termes de stabilité dans le temps. A titre d'exemple, en utilisant du PDO d'origine fossile, une formulation avec 2,5% d'acide isononanoïque, 0,5% d'acide sébacique, 0,21% de tolyltriazole et de la potasse à 50%, donne une solution trouble, avec une floculation blanchâtre en suspension, qui dans le temps précipite. Cet inconvénient n'apparaît pas, en revanche, avec du PDO d'origine végétale.

Il est possible de distinguer un bio-PDO d'un PDO d'origine fossile, par exemple par l'analyse radio carbone. On met alors en évidence les isotopes de carbone C¹⁴ qui correspond à un carbone "moderne" formé de plantes jeunes, par exemple le maïs, et C¹² qui correspond à un vieux carbone donc d'origine fossile. Le bio-PDO est donc formé d'une proportion élevée de C¹⁴, par rapport au C¹², c'est à dire de carbone récent (végétal) non "fossilé".

L'acide dicarboxylique aliphatique en C4-C15 peut être choisi parmi les acides succinique, adipique, subérique, azélaïque, sébacique, undécanedioïque, dodécanedioïque, il s'agit de préférence de l'acide sébacique.

L'acide monocarboxylique aliphatique en C7-C11 peut être choisi parmi les acides heptanoïque, octanoïque, nonanoïque, décanoïque, undécanoïque ou leurs isomères, il s'agit de préférence de l'acide isononanoïque. L'acide isononanoïque est nettement plus performant que le 2-EHA. Les avantages de cet acide sont : sa performance du point de vue de l'inhibition contre la corrosion, sa faible dangerosité pour l'être humain et l'environnement, et la mise en évidence d'une synergie avec l'acide sébacique (diacide), ce qui permet de diminuer de moitié sa quantité et d'améliorer la stabilité de la composition dans le temps.

Le liquide de refroidissement concentré comporte une quantité d'eau inférieure à 10% en masse. Cette faible proportion d'eau a augmenté les difficultés à trouver et sélectionner des inhibiteurs efficaces et solubles dans un glycol en C2-C6.

Selon une forme de réalisation préférée, le liquide comporte de 0,1 à 0,5% en masse d'au moins un troisième inhibiteur de corrosion, autre que les acides aliphatiques mono- et dicarboxyliques , et de 0,5 à 5% en masse d'un agent neutralisant basique.

L'inhibiteur de corrosion peut être sélectionné parmi les diazoles et les triazoles, de préférence il s'agit du tolyltriazole. La quantité optimisée est de 0,21% en masse.

L'agent neutralisant basique permet de neutraliser les acides aliphatiques mono- et di-carboxyliques et d'atteindre un pH du liquide de refroidissement concentré compris entre 7 et 10. Il est choisi parmi les hydroxydes alcalins, tel que du KOH ou du NaOH, ou les aminés. Il s'agit de préférence du KOH sous la forme d'une solution de KOH à 50% (appelée aussi solution de potasse à 50% ou lessive de potasse à 50%), la quantité optimisée est de 2,35% en masse. Cette neutralisation entraîne un dégagement de chaleur permettant par ailleurs la solubilisation des composants. L'utilisation du KOH permet d'obtenir les acides aliphatiques mono- et di-carboxyliques sous la forme de leur sel de potassium qui se sont avérés d'une meilleure solubilité dans le liquide anti-congelant que d'autres sels de métaux alcalins, d'ammonium ou d'amines. Là encore, le respect des quantités relatives est très important, une augmentation de la proportion de l'un ou de l'autre entraînant une mauvaise solubilisation, une précipitation et/ou une mauvaise stabilité.

Le liquide de refroidissement concentré selon la présente invention peut être avantageusement utilisé comme liquide de refroidissement d'un moteur thermique de véhicule automobile ou comme liquide caloporteur dans un circuit de climatisation ou de chauffage d'un bâtiment d'habitation ou industriel en le diluant dans l'eau. Suivant les proportions eau/liquide concentré, la température de congélation sera différente. Ainsi, la température de congélation augmente avec la quantité d'eau.

L'invention concerne également un procédé de fabrication d'un liquide de refroidissement tel que décrit précédemment, caractérisé par le fait que l'acide monocarboxylique aliphatique en C7-C11 est ajouté au mélange une fois l'acide dicarboxylique aliphatique en C4-C15 totalement solubilisé dans un glycol en C2-C6.

Un procédé de fabrication préféré est le suivant : l'acide monocarboxylique aliphatique en C7-C11 puis les inhibiteurs de corrosion autres que les acides aliphatiques mono- et di-carboxyliques tels que le tolyltriazole, et les autres composants tels que l'anti-mousse, sont ajoutés à une solution limpide d'acide dicarboxylique aliphatique en C4-C15 et d'agent neutralisant basique, telle qu'une solution de potasse à 50%, dans un mélange d'eau et de glycol en C2-C6.

Le liquide de refroidissement peut également comporter divers autres composants tel qu'un composant anti-mousse et un colorant.

L'invention sera mieux comprise à l'aide de la description suivante de la forme de réalisation préférée du liquide de refroidissement concentré de l'invention.

Un liquide de refroidissement concentré conforme à l'invention comporte majoritairement un glycol en C2-C6 comme liquide anti-congelant et des inhibiteurs de corrosion.

Dans la forme de réalisation présentée, le glycol en C2-C6 est du bio 1,3-propanediol. Les inhibiteurs de corrosion sont un mélange d'acide isononanoïque comme acide monocarboxylique aliphatique en C7-C11 et d'acide sébacique comme acide dicarboxylique aliphatique en C4-C15 dans un rapport de 5. D'autres ingrédients peuvent également être présents dans le liquide de refroidissement concentré. Dans la forme de réalisation présentée, il comporte une faible proportion d'eau, au moins un troisième inhibiteur de corrosion (le tolyltriazole), un agent neutralisant basique (lessive de potasse à 50%) et un composant anti-mousse. L'eau déminéralisée utilisée a pour objet principal d'aider à la dissolution des différents composés dans le liquide anti-congelant.

Selon une forme de réalisation, la composition du liquide de refroidissement concentré qui a fourni les meilleurs résultats est la suivante, en pourcentages massiques :
- eau déminéralisée : 5%
- acide sébacique : 0,5%
- lessive de potasse à 50% : 2,354%
- 1,3-propanediol, et en particulier du bio-1,3-propanediol : 89,356%
- acide isononanoïque : 2,5%
- tolyltriazole (par exemple en poudre) : 0,210%
- composant anti-mousse (par exemple celui commercialisé sous l'appellation Foam Ban 3588G) : 0,080%

L'invention se distingue de l'art antérieur en ce qu'elle tire avantage d'une synergie entre le monoacide, tel que l'acide isononanoïque, et le diacide, tel que l'acide sébacique, ce qui permet de réduire sensiblement de moitié, la quantité d'acide isononanoïque introduite, avec des conséquences favorables en termes de solubilité de tenue au vieillissement. De plus cette formulation est particulièrement efficace avec l'utilisation d'un monoacide d'origine végétale.

La fabrication du liquide de refroidissement concentré selon cette forme de réalisation est réalisée en mélangeant les composants de ce liquide dans l'ordre de leur présentation ci-dessus. Le respect de cet ordre est particulièrement avantageux en ce qu'il permet un dégagement naturel de chaleur lors de l'ajout de la lessive de potasse, ce qui permet de solubiliser l'acide sébacique avant de le mélanger avec le 1,3-propanediol. L'ajout du 1,3-propanediol doit également se faire lorsque la température est élevée pour empêcher la précipitation de l'acide sébacique à son contact. Lors de l'ajout d'acide isononanoïque, un second dégagement de chaleur permet sa solubilisation dans le 1,3-propanediol. Une fois fabriqué, le liquide de refroidissement concentré est stable et ne précipite pas quelle que soit la température de stockage. Les mêmes dégagements de chaleur ont lieu quels que soient l'agent neutralisant basique et les acides aliphatiques mono- ou di-carboxyliques utilisés.

Le procédé peut être détaillé de la manière suivante. L'eau déminéralisée puis l'acide sébacique sont chargés dans une cuve dans laquelle sont agencés des moyens de brassage adaptés et bien connus de l'homme du métier ; il s'agit par exemple d'un mélangeur. Le mélange est brassé jusqu'à la formation d'un mélange laiteux. Puis une solution de potasse à 50% (appelée aussi lessive de potasse à 50% ou solution de KOH à 50%) est ajoutée provoquant un dégagement de chaleur, le mélange est alors brassé jusqu'à la dissolution complète de l'acide sébacique. Le dégagement de chaleur à cette étape peut atteindre plus de 60 °C et permet la dissolution complète de l'acide sébacique. Le 1,3-propanediol est alors ajouté tant que la température du mélange est élevée, en général supérieure à 40 °C et le mélange est brassé jusqu'à homogénéisation complète, en général pendant une durée d'au moins 30 min. L'acide isononanoïque est ensuite ajouté doucement et le mélange est brassé jusqu'à dissolution totale. Une solution limpide et incolore est alors obtenue. Le tolyltriazole, de préférence en poudre, est également ajouté et le mélange brassé jusqu'à solubilisation totale. Enfin, le composé anti-mousse est ajouté doucement et le mélange est brassé jusqu'à dissolution totale. L'homogénéisation et la dissolution totale des composants sont vérifiées à chaque étape de préférence visuellement. Finalement, un liquide limpide est obtenu ayant les caractéristiques suivantes : pH à 20 °C de la dilution à 33% en volume compris entre 8,1 et 8,5 ; densité à 20°C sensiblement égale à 1,060 modulo 0,002 ; réserve d'alcalinité supérieure à 4,8 ml et teneur en eau < 7%.

Pour une dilution contenant 33% en volume de ce liquide concentré, la température de congélation est de -13 °C modulo 2. Pour une dilution contenant 50% en volume du liquide concentré, la température de congélation est de -27°C modulo.

Des essais ont par ailleurs été effectués pour tester la susceptibilité à la corrosion des divers matériaux en contact avec le liquide obtenu. Les essais de corrosion verrerie ont été effectués selon la norme ASTM D1384, i.e. sur une dilution à 33% en volume du liquide concentré. Ces essais ont montré des pertes de masse de l'éprouvette de 1 mg pour de l'acier, 2 mg pour du cuivre, ainsi que pour du laiton ou de la fonte, 3 mg pour de la soudure et 7 mg pour de l'aluminium.

## Revendications

1. Liquide de refroidissement concentré destiné à être ajouté à un liquide caloporteur pour en abaisser la température de congélation, ledit liquide de refroidissement comportant un glycol en C2-C6, de l'eau en quantité inférieure à 10% en masse et des inhibiteurs de corrosion, lesdits inhibiteurs de corrosion étant un mélange au moins d'un acide monocarboxylique aliphatique en C7-C11 et d'un acide dicarboxylique aliphatique en C4-C15, **caractérisé en ce qu'**il comporte une quantité dudit acide dicarboxylique aliphatique en C4-C15 comprise entre 0,1 et 1% en masse et une quantité dudit acide monocarboxylique aliphatique en C7-C11 supérieure ou égale à 0,5% et inférieure à 4% en masse, le rapport en masse entre ledit acide monocarboxylique aliphatique en C7-C11 et ledit acide dicarboxylique aliphatique en C4-C15 étant compris entre 3 et 7.

2. Liquide de refroidissement concentré selon la revendication précédente **caractérisé en ce que** le rapport entre ledit acide monocarboxylique aliphatique en C7-C11 et ledit acide dicarboxylique aliphatique en C4-C15 est compris entre 4,5 et 5,5, de préférence de 5.

3. Liquide de refroidissement concentré selon l'une des revendications précédentes comportant entre 0,3 et 0,8% en masse dudit acide dicarboxylique aliphatique en C4-C15 et entre 2 et 3% en masse dudit acide monocarboxylique aliphatique en C7-C11.

4. Liquide de refroidissement concentré selon l'une des revendications précédentes comportant un mélange d'environ 0,5% en masse dudit acide dicarboxylique aliphatique en C4-C15 et d'environ 2,5% en masse dudit acide monocarboxylique aliphatique en C7-C11.

5. Liquide de refroidissement concentré selon l'une des revendications 1 à 4 **caractérisé en ce que** ledit glycol en C2-C6 est un glycol d'origine végétale.

6. Liquide de refroidissement concentré selon l'une des revendications précédentes **caractérisé en ce que** ledit glycol en C2-C6 est du 1,3-propanediol, de préférence du 1,3-propanediol d'origine végétale.

7. Liquide de refroidissement concentré selon l'une des revendications précédentes dans lequel ledit acide dicarboxylique aliphatique en C4-C15 est choisi parmi l'acide succinique, l'acide adipique, l'acide subérique, l'acide azélaïque, l'acide sébacique, l'acide undécanedioïque, l'acide dodécanedioïque.

8. Liquide de refroidissement concentré selon la revendication 7 dans lequel ledit acide dicarboxylique aliphatique en C4-C15 est l'acide sébacique.

9. Liquide de refroidissement concentré selon l'une des revendications précédentes dans lequel ledit acide monocarboxylique aliphatique en C7-C11 est choisi parmi l'acide heptanoïque, l'acide octanoïque, l'acide nonanoïque, l'acide décanoïque, l'acide undécanoïque ou leurs isomères.

10. Liquide de refroidissement concentré selon la revendication 9 dans lequel ledit acide monocarboxylique aliphatique en C7-C11 est l'acide isononanoïque.

11. Liquide de refroidissement concentré selon l'une des revendications précédentes comportant de 0,1 à 0,5% en masse d'au moins un troisième inhibiteur de corrosion et/ou de 0,5 à 5% en masse d'un agent neutralisant basique.

12. Liquide de refroidissement concentré selon la revendication 11 ledit troisième inhibiteur de corrosion est un diazole ou un triazole, de préférence du tolyltriazole et/ou ledit agent neutralisant basique est un hydroxyde alcalin ou une amine, de préférence du KOH.

13. Utilisation du liquide de refroidissement concentré selon l'une des revendications 1 à 12 comme liquide de refroidissement d'un moteur thermique de véhicule automobile ou comme liquide caloporteur dans un circuit de climatisation ou de chauffage d'un bâtiment, en le diluant dans l'eau, la quantité d'eau dépendant de la température de congélation souhaitée.

14. Procédé de fabrication d'un liquide de refroidissement concentré selon l'une des revendications 1 à 12 **caractérisé par le fait que** l'acide monocarboxylique aliphatique en C7-C11 est ajouté au mélange une fois l'acide dicarboxylique aliphatique en C4-C15 totalement solubilisé dans un glycol en C2-C6.

15. Procédé de fabrication d'un liquide de refroidissement concentré selon la revendication 14 **caractérisé par le fait que** l'acide monocarboxylique aliphatique en C7-C11 puis les inhibiteurs de corrosion autres que les acides dicarboxylique aliphatique en C4-C15 et monocarboxylique aliphatique en C7-C11, tel que le tolyltriazole et les autres composants, tel que l'anti-mousse sont ajoutés à une solution homogénéisée et limpide d'acide dicarboxylique aliphatique en C4-C15 et d'agent neutralisant basique dans un mélange d'eau et d'un glycol en C2-C6.

## Patentansprüche

1. Konzentrierte Kühlflüssigkeit, dazu bestimmt, einer Wärmeträgerflüssigkeit hinzugefügt zu werden, um die Gefriertemperatur davon zu senken, wobei die Kühlflüssigkeit ein C2-C6-Glycol, Wasser in einer Menge von weniger als 10 Massen-% und Korrosionsinhibitoren umfasst, wobei die Korrosionsinhibitoren eine Mischung sind aus mindestens einer aliphatischen C7-C11-Monocarbonsäure und einer aliphatischen C4-C15-Dicarbonsäure, **dadurch gekennzeichnet, dass** sie eine Menge der aliphatischen C4-C15-Dicarbonsäure im Bereich zwischen 0,1 und 1 Massen-% und eine Menge der aliphatischen C7-C11-Monocarbonsäure über oder gleich 0,5 Massen-% und unter 4 Massen-% umfasst, wobei das Massenverhältnis zwischen der aliphatischen C7-C11-Monocarbonsäure und der aliphatischen C4-C15-Dicarbonsäure im Bereich zwischen 3 und 7 liegt.

2. Konzentrierte Kühlflüssigkeit nach dem vorstehenden Anspruch, **dadurch gekennzeichnet, dass** das Verhältnis zwischen der aliphatischen C7-C11-Monocarbonsäure und der aliphatischen C4-C15-Dicarbonsäure im Bereich zwischen 4,5 und 5,5 liegt, vorzugsweise bei 5.

3. Konzentrierte Kühlflüssigkeit nach einem der vorstehenden Ansprüche, umfassend zwischen 0,3 und 0,8 Massen-% die aliphatische C4-C15-Dicarbonsäure und zwischen 2 und 3 Massen-% die aliphatische C7-C11-Monocarbonsäure.

4. Konzentrierte Kühlflüssigkeit nach einem der vorstehenden Ansprüche, umfassend eine Mischung von etwa 0,5 Massen-% der aliphatischen C4-C15-Dicarbonsäure und etwa 2,5 Massen-% der aliphatischen C7-C11-Monocarbonsäure.

5. Konzentrierte Kühlflüssigkeit nach einem der Ansprüche 1 bis 4, **dadurch gekennzeichnet, dass** das C2-C6-Glycol ein Glycol pflanzlichen Ursprungs ist.

6. Konzentrierte Kühlflüssigkeit nach einem der vorstehenden Ansprüche, **dadurch gekennzeichnet, dass** das C2-C6-Glycol 1,3-Propandiol ist, vorzugsweise 1,3-Propandiol pflanzlichen Ursprungs.

7. Konzentrierte Kühlflüssigkeit nach einem der vorstehenden Ansprüche, wobei die aliphatische C4-C15-Dicarbonsäure ausgewählt ist aus Bernsteinsäure, Adipinsäure, Korksäure, Azealinsäure, Sebacinsäure, Undecandisäure, Dodecandisäure.

8. Konzentrierte Kühlflüssigkeit nach Anspruch 7, wobei die aliphatische C4-C15-Dicarbonsäure Sebacinsäure ist.

9. Konzentrierte Kühlflüssigkeit nach einem der vorstehenden Ansprüche, wobei die aliphatische C7-C11-Monocarbonsäure ausgewählt ist aus Heptansäure, Octansäure, Nonansäure, Decansäure, Undecansäure oder deren Isomeren.

10. Konzentrierte Kühlflüssigkeit nach Anspruch 9, wobei die aliphatische C7-C11-Monocarbonsäure Isononansäure ist.

11. Konzentrierte Kühlflüssigkeit nach einem der vorstehenden Ansprüche, umfassend von 0,1 bis 0,5 Massen-% von mindestens einem dritten Korrosionsinhibitor und/oder von 0,5 bis 5 Massen-% von einem basischen Neutralisierungsmittel.

12. Konzentrierte Kühlflüssigkeit nach Anspruch 11, wobei der dritte Korrosionsinhibitor ein Diazol oder ein Triazol ist, vorzugsweise Tolyltriazol, und/oder wobei das basische Neutralisierungsmittel ein alkalisches Hydroxid oder ein Amin ist, vorzugsweise KOH.

13. Verwendung der konzentrierten Kühlflüssigkeit nach einem der Ansprüche 1 bis 12 als Kühlflüssigkeit eines Automobilfahrzeug-Verbrennungsmotors oder als Wärmeträgerflüssigkeit in einem Klimatisierungs- oder Heizungskreislauf eines Gebäudes, indem sie in Wasser verdünnt wird, wobei die Menge an Wasser von der gewünschten Gefriertemperatur abhängt.

14. Herstellungsverfahren einer konzentrierten Kühlflüssigkeit nach einem der Ansprüche 1 bis 12, **gekennzeichnet durch** die Tatsache, dass die aliphatische C7-C11-Monocarbonsäure der Mischung hinzugefügt wird, sobald die aliphatische C4-C15-Dicarbonsäure vollständig in einem C2-C6-Glycol aufgelöst ist.

15. Herstellungsverfahren einer konzentrierten Kühlflüssigkeit nach Anspruch 14, **gekennzeichnet durch** die Tatsache, dass die aliphatische C7-C11-Monocarbonsäure, dann die von den aliphatischen C4-C15-Dicarbonsäuren und der aliphatischen C7-C11-Monocarbonsäure verschiedenen Korrosionsinhibitoren, wie das Tolyltriazol, und die anderen Bestandteile, wie das Antischaummittel, einer homogenisierten und klaren Lösung von aliphatischer C4-C15-Dicarbonsäure und basischem Neutralisierungsmittel in einer Mischung von Wasser und einem C2-C6-Glycol hinzugefügt werden.

## Claims

1. Concentrated cooling liquid intended to be added to a heat transfer liquid to lower the freezing temperature thereof, said cooling liquid comprising a C2-C6 glycol, water in an amount of less than 10% by mass and corrosion inhibitors, said corrosion inhibitors being a mixture of at least a C7-C11 aliphatic monocarboxylic acid and a C4-C15 aliphatic dicarboxylic acid, **characterised in that** it comprises an amount of said C4-C15 aliphatic dicarboxylic acid comprised between 0.1 and 1% by mass and an amount of said C7-C11 aliphatic monocarboxylic acid greater than or equal to 0.5% and less than 4% by mass, the ratio by mass between said C7-C11 aliphatic monocarboxylic acid and said C4-C15 aliphatic dicarboxylic acid being between 3 and 7.

2. Concentrated cooling liquid according to the preceding claim, **characterised in that** the ratio between said C7-C11 aliphatic monocarboxylic acid and said C4-C15 aliphatic dicarboxylic acid is between 4.5 and 5.5, preferably 5.

3. Concentrated cooling liquid according to any of the preceding claims, comprising between 0.3 and 0.8% by mass of said C4-C15 aliphatic dicarboxylic acid and between 2 and 3% by mass of said C7-C11 aliphatic monocarboxylic acid.

4. Concentrated cooling liquid according to any of the preceding claims, comprising a mixture of around 0.5% by mass of said C4-C15 aliphatic dicarboxylic acid and of around 2.5% by mass of said C7-C11 aliphatic monocarboxylic acid.

5. Concentrated cooling liquid according to one of claims 1 to 4, **characterised in that** said C2-C6 glycol is a glycol of plant origin.

6. Concentrated cooling liquid according to any of the preceding claims, **characterised in that** said C2-C6 glycol is 1,3-propanediol, preferably 1,3-propanediol of plant origin.

7. Concentrated cooling liquid according to any of the preceding claims, wherein said C4-C15 aliphatic dicarboxylic acid is selected from among succinic acid, adipic acid, suberic acid, azelaic acid, sebacic acid, undecanedioic acid, dodecanedioic acid.

8. Concentrated cooling liquid according to claim 7, wherein said C4-C15 aliphatic dicarboxylic acid is sebacic acid.

9. Concentrated cooling liquid according to any of the preceding claims, wherein said C7-C11 aliphatic monocarboxylic acid is selected from among heptanoic acid, octanoic acid, nonanoic acid, decanoic acid, undecanoic acid or the isomers thereof.

10. Concentrated cooling liquid according to claim 9, wherein said C7-C11 aliphatic monocarboxylic acid is isononanoic acid.

11. Concentrated cooling liquid according to any of the preceding claims, comprising from 0.1 to 0.5% by mass of at least one third corrosion inhibitor and/or from 0.5 to 5% by mass of a basic neutralising agent.

12. Concentrated cooling liquid according to claim 11, said third corrosion inhibitor is a diazole or a triazole, preferably tolyltriazole and/or said basic neutralising agent is an alkaline hydroxide or an amine, preferably KOH.

13. Use of the concentrated cooling liquid according to any of claims 1 to 12 as a cooling liquid of a thermal engine of a motor vehicle or as a heat transfer liquid in an air-conditioning or heating circuit of a building, by diluting it in water, the quantity of water depending on the desired freezing temperature.

14. Method for manufacturing a concentrated cooling liquid according to any of claims 1 to 12, **characterised by** the fact that the C7-C11 aliphatic monocarboxylic acid is added to the mixture once the C4-C15 aliphatic dicarboxylic acid is entirely solubilised in a C2-C6 glycol.

15. Method for manufacturing a concentrated cooling liquid according to claim 14, **characterised by** the fact that the C7-C11 aliphatic monocarboxylic acid then the corrosion inhibitors other than the C4-C15 aliphatic dicarboxylic and C7-C11 aliphatic monocarboxylic acids, such as the tolyltriazole and the other components, such as the anti-foam are added to a homogenised and limpid solution of C4-C15 aliphatic dicarboxylic acid and basic neutralising agent in a mixture of water and a C2-C6 glycol.
